(19) Europäisches Patentamt
European Patent Office
Office européen des brevets

(11) Veröffentlichungsnummer: **0 054 794**
**B1**

(12) # EUROPÄISCHE PATENTSCHRIFT

(45) Veröffentlichungstag der Patentschrift: **03.10.84**

(51) Int. Cl.³: **C 08 F 8/44**

(21) Anmeldenummer: **81110153.4**

(22) Anmeldetag: **04.12.81**

(54) **Verfahren zur Herstellung von Mischpolymerisaten des Ethylens.**

(30) Priorität: **06.12.80 DE 3046144**

(43) Veröffentlichungstag der Anmeldung: **30.06.82 Patentblatt 82/26**

(45) Bekanntmachung des Hinweises auf die Patenterteilung: **03.10.84 Patentblatt 84/40**

(84) Benannte Vertragsstaaten: **BE DE FR GB IT NL**

(56) Entgegenhaltungen:
**DE - B - 1 191 108**
**FR - A - 2 157 382**
**FR - A - 2 196 356**

**Die Akte enthält technische Angaben, die nach dem Eingang der Anmeldung eingereicht wurden und die nicht in dieser Patentschrift enthalten sind.**

(73) Patentinhaber: **Ruhrchemie Aktiengesellschaft, Bruchstrasse 219, D-4200 Oberhausen 13 (DE)**

(72) Erfinder: **Hobes, Victor John, Dr. Dipl.-Chem., Theodor-Sorm-Strasse 4, D-4220 Dinslaken (DE)**
Erfinder: **Payer, Wolfgang, Dr. Dipl.-Chem., Zedernweg 58, D-4230 Wesel 1 (DE)**

(74) Vertreter: **Reichelt, Karl-Heinz, Dr., m. Br. Ruhrchemie Aktiengesellschaft Abt. PLD Postfach 13 01 60, D-4200 Oberhausen 13 (DE)**

**EP 0 054 794 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein Verfahren zur Herstellung von Mischpolymerisaten des Ethylens, die mindestens 60 Gew.-% Ethylen, 0 bis 20 Gew.-% Ester von $C_3$- bis $C_{12}$-Alkencarbonsäuren mit $C_1$- bis $C_8$-primären Alkoholen, 1 bis 20 Gew.-% $C_3$- bis $C_{12}$-Alkencarbonsäuren sowie gegebenenfalls untergeordnete Mengen üblicher weiterer mit Ethylen copolymerisierbarer Monomeren enthalten.

Die Herstellung Alkencarbonsäure enthaltender Mischpolymerisate ist bekannt. So kann man Gemische aus Ethylen, Alkencarbonsäuren und weiteren Monomeren, bei hohen Drücken und hohen Temperaturen, mittels radikalbildender Initiatoren umsetzen (vgl. z.B. DE-OS 2 400 978, DE-OS 1 669 685). Ein Nachteil dieser Arbeitsweise ist die korrodierende Wirkung der freien Alkencarbonsäuren unter den Reaktionsbedingungen auf die Anlagenteile. Man erhält daher Polymerisate, die stark verfärbt sind.

Um diese Schwierigkeiten zu umgehen, setzt man nach anderen bekannten Verfahren als Monomere Ester der Alkencarbonsäuren in den Polymerisationsprozess ein und spaltet anschliessend den Alkoholrest ab.

Die Abspaltung kann bei Estern sekundärer und tertiärer Alkohole hydrolytisch oder pyrolytisch, bei Estern primärer Alkohole nur hydrolytisch erfolgen.

Die hydrolytische Abspaltung der Estergruppen geht in Lösung vor sich und setzt lange Verweilzeiten voraus. Anschliessend muss das Reaktionsprodukt durch Ausfällen isoliert werden. Sie ist aufgrund dieses hohen Aufwandes technisch nur von ungeordneter Bedeutung.

Es bestand daher die Aufgabe, einen Prozess bereitzustellen, der die Herstellung von homogenen, unvernetzten und unverfärbten alkencarbonsäurehaltigen Mischpolymerisaten des Ethylens erlaubt.

Erfindungsgemäss wird diese Aufgabe gelöst durch ein Verfahren zur Herstellung von Mischpolymerisaten des Ethylens, die mehr als 60 Gew.-% Ethylen, 0 bis 20 Gew.-% Ester von $C_3$- bis $C_{12}$-Alkencarbonsäuren mit $C_1$- bis $C_8$-primären Alkoholen, 1 bis 20 Gew.-% $C_3$- bis $C_{12}$-Alkencarbonsäuren und gegebenenfalls untergeordnete Mengen üblicher weiterer mit Ethylen copolymerisierbarer Monomeren enthalten, durch Verseifung von Mischpolymerisaten (Einsatzmaterial), die als solche aus mindestens 50 Gew.-% Ethylen, 2 bis 50 Gew.-% Ester von $C_3$- bis $C_{12}$-Alkencarbonsäuren mit $C_1$- bis $C_8$-primären Alkoholen, bis 3 Gew.-% $C_3$-$C_{12}$-Alkencarbonsäuren sowie untergeordnete Mengen weiterer mit Ethylen copolymerisierbarer Monomereinheiten bestehen, wobei man ein Gewichtsteil Copolymerisatteilchen einer Grösse von 0,1 bis 8 mm, vorzugsweise 1 bis 5 mm, in 1 bis 10 Gewichtsteilen Keton der allgemeinen Formel

$$R-\overset{\displaystyle O}{\overset{\|}{C}}-R'$$

wobei R und R' gleich oder verschieden sind und einen geradkettigen oder verzweigten Alkylrest mit 1 bis 6 Kohlenstoffatomen bedeuten, suspendiert und die im Polymerisat enthaltenen Alkencarbonsäure-Ester primerer Alkohole bei Temperaturen zwischen 40 und 75°C in Gegenwart alkalischer Verseifungsmittel unter Erhaltung der Granulatstruktur teilweise oder vollständig verseift. Dabei kann die Polymerisation des Ethylens mit den copolymerisierbaren Monomeren bei Drücken von 100 bis 8000 bar und Temperaturen von 150 bis 350°C in Gegenwart katalytischer Mengen Radikale bildender Initiatoren durchgeführt worden sein.

Verseifungsmittel, die nach der neuen Arbeitsweise Anwendung finden, sind Alkalimetallhydroxide wie NaOH und KOH und Alkalimetallmethylate und -ähtyate wie Natriummethylat und Kaliumäthylat. Sie können der Polymerisatlösung in fester Form oder als alkoholische Lösung, auf einmal, anteilsweise oder kontinuierlich zugesetzt werden.

Übliche, mit Ethylen copolymerisierbare Monomere, die im Rahmen der Erfindung in den Polymerisaten zusätzlich enthalten sein können, sind z.B. $C_3$- bis $C_8$-Alkene, Ester von $C_3$- bis $C_{12}$ -Alkencarbonsäuren mit sekundären bzw. tertiären Alkoholen, Vinyl- und Alkenylester, Vinyl- und Alkenyläther, Vinyl- und Alkenylalkohole, N-Vinyl- und N-Alkenylverbindungen, wie N-Vinylpyrrolidon, N-Vinylcarbazol, N-Vinylcaprolactam, Acryl- und Methacrylamide, Acryl- und Methacrylnitrile, Alkenylhalogenide wie Vinylfluorid und Vinylidenfluorid, Vinyl- und Alkenylketone, Vinyl- und Alkenylsulfone und -sulfonate, Dicarbonate, Säureanhydride und Styrol. Ausser ethylenisch ungesättigten Verbindungen können auch andere copolymerisierbare Stoffe, wie Kohlenmonoxid und Schwefeldioxid mit einpolymerisiert werden.

Die Herstellung der Alkencarbonsäureester enthaltenden Copolymerisate des Ethylens, die erfindungsgemäss hydrolytisch zu den Alkencarbonsäure enthaltenden Copolymerisaten verseift werden, erfolgt in bekannter Weise durch Umsetzung der Monomeren bei Drücken von 100 bis 8000 bar und Temperaturen von 110 bis 350°C in Autoklaven oder in Röhrenreaktoren [vgl. hierzu Ullmanns Encyclopädie der technischen Chemie, 3. Auflage, (1963), Bd. 14, Seite 139]. Das Verfahren wird bevorzugt kontinuierlich durchgeführt, wobei nichtumgesetzte Teilmengen der Monomeren im Kreis geführt werden. Die Umsetzung erfolgt in Gegenwart katalytischer Mengen Radikale bildende Initiatoren, z.B. Sauerstoff, in Mengen von 2 bis 250 Mol-ppm, bezogen auf das zu polymerisierende Ethylen. Neben Sauerstoff können als Initiatoren auch Peroxide, wie tert.-Butylperbenzoat, Dilaurylperoxid, Di-tert.-Butylperoxid oder Azo-buttersäuredinitril in Mengen von 2 bis 200 Mol-ppm, bezogen auf das Ethylen, verwendet werden. Vorteilhaft führt man die Polymerisation in Gegenwart von Moderatoren, wie aliphatischen Alkoholen und Carbonylverbindungen, gesättigten und ungesättigten Kohlenwasserstoffen oder chlorierten Kohlenwasserstoffen und Wasserstoff durch.

Die Polymerisate fallen bei der Polymerisation in der für die Weiterverarbeitung durch Verseifung erforderlichen Teilchengrösse von 0,1 bis 8 mm an, so dass zusätzliche Arbeitsschritte, wie Mahlvorgänge, nicht erforderlich sind.

Ein entscheidendes Merkmal der erfindungsgemässen Arbeitsweise ist die Suspendierung des Ausgangsgranulats in Ketonen wie Aceton, Methylethylketon, Methylisobutylketon. Diese Stoffe diffundieren in das Granulatinnere und transportieren dabei auch das gelöste Verseifungsmittel in die Polymerisatteilchen hinein. Üblicherweise wendet man 1 bis 10 Gewichtsteile und vorzugsweise 2 bis 6 Gewichtsteile Suspensionshilfsmittel je Gewichtsanteil Copolymerisat an. Sie können als reine Substanzen oder auch in Mischungen eingesetzt werden. Wichtig ist, dass das Suspensionshilfsmittel bei Temperaturen, die unter dem Schmelzbereich des Ausgangsproduktes liegen, das Mischpolymere zwar anquillt aber nicht löst. Diese Temperaturen liegen etwa 5 bis 10°C unterhalb den Temperaturen, bei denen der Schmelzvorgang einsetzt.

Das Verseifungsmittel kann sowohl in stöchiometrischer Menge als auch im Überschuss oder im Unterschuss, jeweils bezogen auf den einpolymerisierten Alkencarbonsäureester, eingesetzt werden. Je nach der Katalysatormenge lässt sich gezielt ein bestimmter Verseifungsgrad einstellen. Bei Anwendung des Katalysators im Überschuss werden die Alkencarbonsäureester nahezu quantitativ verseift, während der Einsatz stöchiometrischer oder unterstöchiometrischer Mengen des alkalischen Verseifungsmittels zu Reaktionsprodukten führt, die noch mehr oder minder grosse Anteile Alkencarbonsäureester enthalten.

Ausser durch die Menge des zugesetzten alkalischen Verseifungsmittels kann der Verseifungsgrad auch durch die Verweilzeit beeinflusst werden. Sie liegt in Abhängigkeit von der Arbeitstemperatur, der Granulatgrösse und der Menge an einpolymerisierten Alkencarbonsäureestern bei 0,5 bis 10 Stunden, insbesondere bei 0,5 bis 5 Stunden, vorzugsweise bei 2 bis 4 Stunden. Niedrige Arbeitstemperaturen, grosse Granulatpartikel und hoher Alkencarbonsäureesteranteil erfordern, um denselben Verseifungsgrad zu erreichen, längere Verweilzeiten als höhere Arbeitstemperaturen, kleine Granulatpartikel und niedriger Alkencarbonsäureesteranteil.

Die praktische Durchführung der Verseifung erfolgt in einfacher Weise dadurch, dass das Polymerisat im Keton suspendiert wird. Unter Rühren erhitzt man auf die gewünschte Temperatur, fügt das Verseifungsmittel hinzu und lässt so lange reagieren, bis sich der gewünschte Verseifungsgrad eingestellt hat.

Die erfindungsgemässen Polymerisate finden als Kleber und gemahlen auch als Beschichtungsmaterial Anwendung.

Die Erfindung ist in den folgenden Beispielen näher beschrieben:

*Beispiel 1*

In einem mit Rührer, Rückflusskühler und Kontaktthermometer versehenen 2-l-Kolben werden 100 g granuliertes Ethylen-n-Butylacrylat-Copolymerisat, das 25 Gew.-% (bezogen auf das Polymerisat) n-Butylacrylat enthält und einen Schmelzindex (190°C/2 kg) von 8,0 g/10 min, besitzt, 800 ml Methylethylketon und 60 g KOH (86%ig, das Vierfache der dem n-Butylacrylat äquivalenten Menge) gelöst in 200 ml Methanol, vorgelegt.

Nach 5 Stunden Reaktionszeit bei 74°C wird auf etwa 50°C abgekühlt, das Granulat abgesaugt, bei Rückflusstemperatur (74°C) mit 50 ml 32%iger Salzsäure in 500 ml Methylethylketon entionisiert und viermal mit 500 ml Aceton/Wasser-Gemisch (9 : 1) bei 60°C gewaschen. Nach dem Trocknen bei 60°C im Umlufttrockenschrank werden 90 g eines farblosen Reaktionsproduktes mit einem Anteil von 13,4% Acrylsäure und 3,7% n-Butylacrylat erhalten, entsprechend einem Verseifungsgrad von 85%; der Schmelzindex (190°C/2 kg) des Polymerisats beträgt 3,0 g/10 min.

*Beispiel 2*

In einem mit Rührer, Rückflusskühler und Kontaktthermometer versehenen 2-l-Kolben werden 100 g granuliertes Ethylen-2-Ethylhexylacrylat-Copolymerisat, das 19% (bezogen auf das Polymerisat) 2-Ethylhexylacrylat einpolymerisiert enthält und einen Schmelzindex (190°C/2 kg) von 33 g/10 min aufweist, 800 ml Methylethylketon und 20 g KOH (86%ig, das Dreifache der dem 2-Ethylhexylacrylat äquivalenten Menge) gelöst in 100 ml Methanol vorgelegt.

Nach 5 Stunden Reaktionszeit bei 74°C wird das Granulat abgesaugt, bei Rückflusstemperatur (74°C) mit 70 ml 32%iger Salzsäure in 500 ml Methylethylketon entionisiert und viermal mit 500 ml Aceton/Wasser-Gemisch (9 : 1) gewaschen. Nach dem Trocknen bei 60°C im Umlufttrockenschrank erhält man 89 g farbloses Granulat mit einem Anteil von 7,7% Acrylsäure und 1,7% 2-Ethylhexylacrylat, entsprechend einem Verseifungsgrad von 91,6%; der Schmelzindex (190°C/2 kg) beträgt 21 g/10 min.

*Beispiel 3*

In einem mit Rührer, Rückflusskühler und Kontaktthermometer versehenen 2-l-Kolben werden 100 g granuliertes Ethylen-Ethylacrylat-Copolymerisat, das 18 Gew.-% (bezogen auf das Polymerisat) Ethylacrylat einpolymerisiert enthält und einen Schmelzindex (190°C/2 kg) von 5,2 g/10 min aufweist, 800 ml Methylethylketon und 47 g KOH (86%ig, das Vierfache der dem Ethylacrylat äquivalenten Menge) gelöst in 200 ml Methanol vorgelegt.

Nach 5 Stunden Reaktionszeit bei 74°C wird auf etwa 50°C abgekühlt, das Granulat abgesaugt und mit 50 ml 32%iger Salzsäure in 500 ml Aceton/Wasser-Gemisch (9 : 1) bei 60°C gewaschen.

Nach dem Trocknen bei 60°C im Umlufttrockenschrank werden 95 g eines farblosen Verseifungsproduktes mit einem Anteil von 7,1% Acrylsäure und 9,0% Ethylacrylat erhalten, entsprechend einem Verseifungsgrad von 52%; der Schmelzindex (190°C/2 kg) beträgt 0,15 g/10 min.

**Petantansprüche**

1. Verfahren zur Herstellung von Mischpolymerisaten des Ethylens, die mehr als 60 Gew.-% Ethylen, 0 bis 20 Gew.-% Ester von $C_3$- bis $C_{12}$-Alkencarbonsäuren mit $C_1$- bis $C_8$-primären Alkoholen, 1 bis 20 Gew.-% $C_3$- bis $C_{12}$-Alkencarbonsäuren sowie gegebenenfalls untergeordnete Mengen üblicher

weiterer mit Ethylen copolymerisierbarer Monomeren erhalten, durch Verseifung von Mischpolymerisaten (Einsatzmaterial), die als solche aus mindestens 50 Gew.-% Ethylen, 2 bis 50 Gew.-% Ester von $C_3$- bis $C_{12}$-Alkencarbonsäuren mit $C_1$- bis $C_8$-primären Alkoholen, bis 3 Gew.-% $C_3$-$C_{12}$-Alcencarbonsäuren sowie untergeordneten Mengen weiterer mit Ethylen copolymerisierbarer Monomeren bestehen, dadurch gekennzeichnet, dass man ein Gewichtsteil des Einsatzmaterials mit einer Teilchengrösse von 0,1 bis 8 mm, vorzugsweise 1 bis 5 mm, in 1 bis 10 Gewichtsteilen Keton der allgemeinen Formel

$$R-\overset{\overset{\displaystyle O}{\|}}{C}-R'$$

wobei R und R' gleich oder verschieden sind und einen geradkettigen oder verzweigten Alkylrest mit 1 bis 6 Kohlenstoffatomen bedeuten, suspendiert und die im Polymerisat enthaltenen Alkencarbonsäureester primärer Alkohole bei Temperaturen zwischen 40 und 75°C in Gegenwart alkalischer Verseifungsmittel unter Erhaltung der Granulatstruktur teilweise oder vollständig verseift.

2. Verfahren nach Anspruch 1, dadurch gekennzeichnet, dass man ein Gewichtsteil Copolymerisatteilchen in 2 bis 8 Gewichtsteilen Keton suspendiert.

3. Verfahren nach Anspruch 1 und 2, dadurch gekennzeichnet, dass die Copolymerisatteilchen in Aceton, Methylethylketon, Methylisobutylketon oder deren Gemischen suspendiert werden.

4. Verfahren nach Anspruch 1 bis 3, dadurch gekennzeichnet, dass als Verseifungsmittel Alkalimetallhydroxide verwendet werden.

**Claims**

1. Process for the preparation of mixed polymerisates of ethylene containing more than 60 per cent by weight ethylene, 0 to 20 per cent by weight esters of $C_3$ to $C_{12}$ alkene carboxylic acids with $C_1$ to $C_8$ primary alcohols, 1 to 20 per cent by weight $C_3$ to $C_{12}$ alkene carboxylic acids as well as in some cases minor quantities of other commen monomers copolymerisable with ethylene by the saponification of mixed polymerisates (feed material) consisting as such of at least 50 per cent by weight ethylene, 2 to 50 per cent by weight esters of $C_3$ to $C_{12}$ alkene carboxylic acids with $C_1$ to $C_8$ primary alcohols, up to 3 per cent by weight $C_3$-$C_{12}$ alkene carboxylic acids as well as minor quantities of other monomers copolymerisable with ethylene, characterised in that one part by weight of the feed material with a particle size of 0.1 to 8 mm, preferably 1 to 5 mm, is suspended in 1 to 10 parts by weight ketone with the general formula:

$$R-\overset{\overset{\displaystyle O}{\|}}{C}-R'$$

whereby R and R' are the same of different and a straight-chained or branched alkyl group with one to six carbon atoms and the alkene carboxylic acid esters of primary alcohols contained in the polymerisate are saponified at temperatures between 40 and 75°C in the presence of alkaline saponification agents whereby the granulate structure is partly or completely maintained.

2. Process according to claim 1, characterised in that one part by weight of copolymerisate particles is suspended in 2 to 8 parts by weight of ketone.

3. Process according to claims 1 and 2, characterised in that the copolymerisate particles are suspended in acetone, methyl ethyl ketone, methyl isobutyl ketone or mixtures thereof.

4. Process according to claims 1 to 3, characterised in that alkaline metal hydroxides are used as saponification agents.

**Revendications**

1. Procédé de préparation de copolymères de l'éthylène contenant plus de 60% en poids d'éthylène, 0 à 20% en poids d'esters d'acides alcène-carboxyliques en $C_3$-$C_{12}$ et d'alcools primaires en $C_1$-$C_8$, 1 à 20% en poids d'acides alcène-carboxyliques en $C_3$-$C_{12}$ et le cas échéant des proportions mineures d'autres monomères usuels copolymérisable avec l'éthylène, par saponification de copolymères (produit de départ) consistant eux-mêmes en au moins 50% en poids d'éthylène, 2 à 50% en poids d'esters d'acides alcène-carboxyliques en $C_3$-$C_{12}$ et d'alcools primaires en $C_1$-$C_8$, jusqu'à 3% en poids d'acides alcène-carboxyliques en $C_3$-$C_{12}$ et des proportions mineures d'autres monomères copolymérisables avec l'éthylène, caractérisé en ce que l'on met en suspension une partie en poids du produit de départ à une dimension de particules de 0,1 à 8 mm, de préférence de 1 à 5 mm, dans 1 à 10 parties en poids d'une cétone de formule générale:

$$R-\overset{\overset{\displaystyle O}{\|}}{C}-R'$$

dans laquelle R et R', ayant des significations identiques ou différentes, représentent chacun un groupe alkyle à chaîne droite ou ramifiée contenant 1 à 6 atomes de carbone, et on saponifie en totalité ou en partie les esters d'acides alcène-carboxyliques et d'alcools primaires contenus dans le polymère à des températures de 40 à 75°C en présence d'agents saponifiants alcalins en conservant la structure granulaire.

2. Procédé selon la revendication 1, caractérisé en ce que l'on met en suspension une partie en poids de particules de copolymère dans 2 à 8 parties en poids de la cétone.

3. Procédé selon les revendications 1 et 2, caractérisé en ce que l'on met les particules de copolymère en suspension dans l'acétone, la méthyléthylcétone, la méthylisobutylcétone ou leurs mélanges.

4. Procédé selon les revendications 1 à 3, caractérisé en ce que l'on utilise en tant qu'agents saponifiants des hydroxydes de métaux alcalins.